# EUROPÄISCHE PATENTANMELDUNG

(11) **EP 0 789 243 A1**
(43) Veröffentlichungstag der Anmeldung: **13.08.1997**
(21) Anmeldenummer: 97101180.4
(22) Anmeldetag: 25.01.1997
(51) Int. Cl.: G01P 15/08, G01C 9/06, G01C 9/24

(54) **Optischer Sensor vom Typ einer Wasserwaage zur Erfassung von Beschleunigungen oder Neigungen durch Bestimmung der Bewegung eines Körpers in einem Fluid**

(30) Priorität: 06.02.1996 DE 19604255
(71) Anmelder: TEMIC TELEFUNKEN microelectronic GmbH, 74072 Heilbronn (DE)
(72) Erfinder: Baur, Richard, 85276 Pfaffenhofen (DE); Link, Bernhard, 85049 Ingolstadt (DE); Schiffl, Heinz, 80935 München (DE); Wierzioch, Klaus-Dieter, 86529 Schrobenhausen (DE); Kiessling, Harald, 07927 Hirschberg (DE); Palme, Martin, Dr., 07745 Jena (DE)
(74) Vertreter: Maute, Hans-Jürgen, Dipl.-Ing.

(57) **Zusammenfassung**

Vorrichtung zur optischen Bestimmung von Beschleunigungen oder Neigungen. Die Vorrichtung entspricht einer Libelle, bei der die Position der Gasblase mit optischen Mitteln bestimmt wird.

Ein Hohlraum in einem Gehäuse ist mit einem Medium, z.B. einer Flüssigkeit, gefüllt. In diesem Medium ist ein Körper, vorzugsweise eine Gasblase, angeordnet, welche sich bei Beschleunigung oder Neigung des Gehäuses, in dem der Hohlraum angeordnet ist, bewegt. Eine Lichtquelle sendet divergentes Licht durch den Hohlraum, welches von einem vorzugsweise sphärischen oder torischen Reflektor reflekitiert und wieder durch den Hohlraum gesendet wird. Ein benachbart zur Lichtquelle angeordneter Lichtdetektor empfängt das Licht nach zweimaligem Durchlaufen des Mediums.

Das Licht wird durch den Reflektor auf den Detektor gebündelt, dessen Fläche größer als die Fläche des reflektierten Lichtbündels gewählt ist, wodurch ein Großteil des emittierten Lichtes zur Signalbildung beiträgt.

## Beschreibung

Die Erfindung betrifft eine Vorrichtung zur optischen Erfassung beschleunigungs- und/oder neigungsbedingeter Bewegungen eines Körpers in einem Medium, mit mindestens einem Sender zur Abgabe von Licht auf das Medium, einem für dieses Licht optisch transparenten Trägerkörper, in dessen Inneren ein Hohlraum zur Aufnahme des Mediums ausgebildet ist, und mit mindestens einem Empfänger zum Empfangen des Lichtes nach Durchlaufen des Mediums.

Derartige Vorrichtungen bzw. Neigungswinkel- und Beschleunigungssensoren nutzen die Wirkung der Gravitation oder anderer Beschleunigungen auf Massen oder Gasvolumina.

Aus der DE PS 4 114 992 C1 ist die Messung der bschleunigungsbedingten Bewegung eines Quecksilbertropfens bekannt, der sich im tiefsten Punkt eines konusförmigen Hohlraums befindet, welcher mit elektrischen Kontaktierungspunkten versehen ist. Da die Trägheit des Metalltropfens eine lange Ansprechzeit bedingt, sind die Einsatzmöglichkeiten derartiger Sensoren für zeitkritische Sicherheitstechniken stark eingeschränkt. Darüber hinaus ist der konstruktive Aufwand, insbesondere für den kontaktierten konusförmigen Körpers sehr hoch. Außerdem kann auch die Wirkung von Störeinflüssen auf den Metalltropfen zu Problemen führen. Da diese Sensoren bei einem Überschreiten definierter Grenzwinkel ansprechen sollen, könnte die Überlagerung von kurzzeitigen Stößen und Schwingungen, beispielsweise in Fahrzeugen, diesen Zustand unerwünscht simulieren.

Bei mechanischen Störeinflüssen sind für zeitkritische Anwendungen Sensoren vorteilhafter, die die beschleunigungs- oder neigungsbedingte Veränderung der Position eines Körpers in einem Medium, beispielsweise einer Gasblase in einer Flüssigkeit, optisch registrieren. Derartige Sensoren werden im Automobilbau verwandt zur Auslösung von Airbags, Überrollbügeln u.ä.

Die wohl bekannteste Anwendung eines Neigungswinkelmessers ist die Wasserwaage oder die Nivellierlibelle. Dabei befindet sich eine Gasblase oder ein Objekt aus schwimmfähigem Material in einem verschlossenen Rohr oder Körper, der optisch transparent ist und allgemein als "Libelle" bezeichnet wird.

Eine Anwendung dieses Libellenprinzips mit optischer Registrierung ist in der DE-OS 3 815 938 A1 beschrieben. In der Figur 7 ist das optische Prinzip diese Moduls dargestellt. Das Modul umfaßt ein kreisförmig gebogenes Libellenrohr 3a, in der sich eine Flüssigkeit 4a befindet. Die in der Flüssigkeit 4a schwimmende Gasblase 11a ist gravitationsbedingt an der höchsten Stelle positioniert. Bei einer Neigung oder Beschleunigung bewegt sich das beispielsweise aus einer Luftblase bestehende Anzeigemedium 11a im Libellenrohr 3a und durchläuft den durchstrahlten Bereich einer von einem Sender 1a und einem Empfänger 8a definierten Meßstrecke und bewirkt dort im allgemeinen einen Intensitätsabfall des Lichtes, der erfaßbar ist.

Bei dieser Anordnung ist allerdings die optische Registrierung des Blasendurchgangs nicht immer eindeutig möglich. Dieses Libellenmodul stellt nämlich nicht sicher, daß die durch die Sender-/Empfänger-Strecke laufende Blase in jedem Fall des Durchgangs einen Intensitätsabfall hervorruft.

Die optische Registrierung der neigungsbedingten Bewegung einer Luftblase in einer Libelle erfordert die Durchstrahlung des Libellenquerschnitts und der darin befindlichen Flüssigkeit. Die aus dem Glas des Libellenrohrs und der Flüssigkeit bestehende Libelle stellt vom optischen Standpunkt eine stark aberrationsbehaftete Zylinderlinse dar, die in einer Dimension eine Brechkraft einführt, senkrecht dazu aber nicht. Bei beliebiger Anordnung von Sender und Empfänger bewirkt diese Brechkraft, daß Strahlanteile aus den Randbereichen des Libellenquerschnitts die Empfängerfläche nicht erreichen, d.h. es existieren Positionen des Blasendurchgangs, die ohne Wirkung auf das Signal am Empfänger bleiben. Dies kann auch dann auftreten, wenn Sender und Empfänger so auf einer Geraden positioniert sind, daß durch die Zylinderlinsenwirkung in einer Dimension eine optische Abbildung realisiert wird. Die großen Aberrationen führen ebenfalls dazu, daß die Randstrahlen weit vom Empfänger entfernt die Empfängerebene erreichen und somit der Blasendurchgang nicht registriert wird.

Wenn die optische Wirkung des Libellenrohrs mit der Flüssigkeit, die der einer Zylinderlinse entspricht, nicht berücksichtigt wird, entsteht eine sogenannte "Lücke" in der Funktion. Die beliebige Vergrößerung der Blase in der kritischen Richtung ist aus physikalischen Gründen nicht möglich, da ab einer bestimmten Blasengröße nur die Längsausdehnung der Blase parallel zur Libellenachse und nicht die in Richtung des Libellenradius gehende Ausdehnung zunimmt. Die Temperaturabhängigkeit der Flüssigkeit führt zu einer weiteren Verkleinerung der Blasengröße, die zusätzlich zu berücksichtigen ist.

In der zweiten Dimension senkrecht zur Zylinderlinsenwirkung bleibt die Strahlung divergent und nur der schmale Winkelbereich, entsprechend der Empfängergröße, wird in ein elektrisches Signal umgesetzt. Bei üblichen Divergenzwinkeln von optoelektronischen Lichtquellen und Empfängern, die etwa 40 bis 60° betragen können, kann der Signalpegel damit um ein bis zwei Größenordnungen unter dem möglichen Wert liegen. Die absolute Höhe des Signalpegels ist aber für die Eindeutigkeit der Interpretation der Spannungsveränderung am Empfänger notwendig.

Der Absolutwert des Intensitätsabfalls und damit die Spannungsdifferenz am Empfänger wird vom Verhältnis der Projektion der Blasengröße (effektive Fläche) auf den positionsabhängigen Bündelquerschnitt bestimmt. Um ca. 50 % Intensitätsabfall zu erreichen, muß die effektive Fläche der Blase ebenfalls in dieser Dimension liegen. Selbst bei Beschränkung der Höhe des Lichtbündels auf die Dimension des Blasenquerschnitts mußt der Durchmesser der Blase etwa dem Radius des Innendurchmessers des Libellenrohrs entsprechen. Bedingt durch die physikalischen Eigenschaften von Flüssigkeiten, ist dieses Verhältnis nicht frei wählbar. Hinzu kommt, daß die Herstellung gekrümmter Libellen wesentlich aufwendiger und somit kostenintensiver ist.

Der Erfindung liegt daher die Aufgabe zugrunde, eine Vorrichtung zur optischen Erfassung beschleunigungs- und/oder neigungsbedingter Bewegungen eines Körpers in einem Medium der eingangs genannten Art anzugeben, die mit technisch einfachen Mitteln stets die durch Neigung oder Beschleunigung bedingte Bewegung eines Körpers in einem Medium eindeutig registriert und gleichzeitig kostengünstig herstellbar ist.

Diese Aufgabe wird bei einer Vorrichtung zur optischen Erfassung beschleunigungs- und/oder neigungsbedingter Bewegungen eines Körpers in einem Medium der eingangs genannten Art erfindungsgemäß dadurch gelöst, daß eine Einrichtung zum mehrfachen Durchstrahlen des von dem Sender abgegebenen Lichtes durch das Medium vor dem Erreichen des Empfängers vorgesehen ist.

Dadurch ist eine vollständige Ausleuchtung des Hohlraumquerschnitts und vollständige Erfassung der Strahlung bzw. des Lichtes durch den Empfänger sichergestellt. Das bedeutet, daß eine Signalerfassung bei Blasendurchgängen in jeder Position innerhalb des Hohlraumquerschnitts eindeutig gegeben ist.

Durch den mehrfachen Strahlendurchgang des Lichtes wird die Effizienz der Erfassungsvorrichtung (Sensor) und die Wirksamkeit der Körpergröße erhöht, wodurch eine Vergrößerung der Differenz zwischen den Spannungswerten am Empfänger mit und ohne Körper bzw. Blase im Lichtstrahl erreicht wird, so daß eindeutige Signale erhalten werden.

Durch die Realisierung einer optischen Abbildung des Senders auf die Empfängerfläche durch vorzugsweise eine optische Komponente, beispielsweise in Form eines Reflektors, wird die Beleuchtungsstärke auf der Empfängerfläche und damit die absolute Signalgröße erhöht.

Störeinflüsse können vorteilhaft beseitigt werden durch definierte Einbeziehung oder Unterdrückung der Brechkraft, z.B. der Zylinderlinsenwirkung mit großer Aberration, des Hohlraums durch Einbeziehung optischer Komponenten bzw. definierter Gestaltung der Brechzahlen vom Trägerkörper, der Flüssigkeit und der Umgebung.

Da der Sender und der Empfänger auf der gleichen Seite des Trägerkörpers angeordnet werden können, ist durch die Faltung des Strahlenganges eine kurze Baulänge realisierbar. Auch ist es möglich, mehrere aus Sender und Empfänger bestehende Sensormodule an einem Trägerkörper anzuordnen.

Da erfindungsgemäß nicht mehr gekrümmte Libellenkörper oder Trägerkörper notwendig sind, können durch Verwendung gerader Trägerkörper die Herstellungskosten für den Sensor gesenkt werden, insbesondere durch Ausbildung des Trägerkörpers als Spritzgrußteil.

Weitere vorteilhafte Ausführungsformen des Erfindungsgegenstandes sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1:: einen Querschnitt einer Erfassungsvorrichtung nach einem ersten Ausführungsbeispiel in schematischer Darstellung,
- Fig. 2:: eine schematische Darstellung der Erfassungsvorrichtung ähnlich der Darstellung in Fig.1 unter genauer Darstellung verschiedener Strahlengangabschnitte eines von einem Sensor ausgesandten, divergenten Lichtstrahls,
- Fig. 3:: eine Perspektivansicht eines Trägerkörpers der Erfassungsvorrichtung mit zusätzlichem Verschluß gemäß einem zweiten Ausführungsbeispiel in schematischer Darstellung,
- Fig. 4:: eine schematische Perspektivansicht (im Querschnitt) eines dritten Ausführungsbeispiels der Erfassungsvorrichtung,
- Fig. 5:: einen Querschnitt des Ausführungsbeispiels nach Fig. 4 in schematischer Darstellung,
- Fig. 6A bis 6C :: ein viertes Ausführungsbeispiel der Erfassungsvorrichtung in schematischer Darstellung in
- Draufsicht (Fig. 6A)
- im Querschnitt (Fig. 6B, 90° gegenüber Fig. 6A gedreht),
- in perspektivischer Darstellung (Fig.6C), und

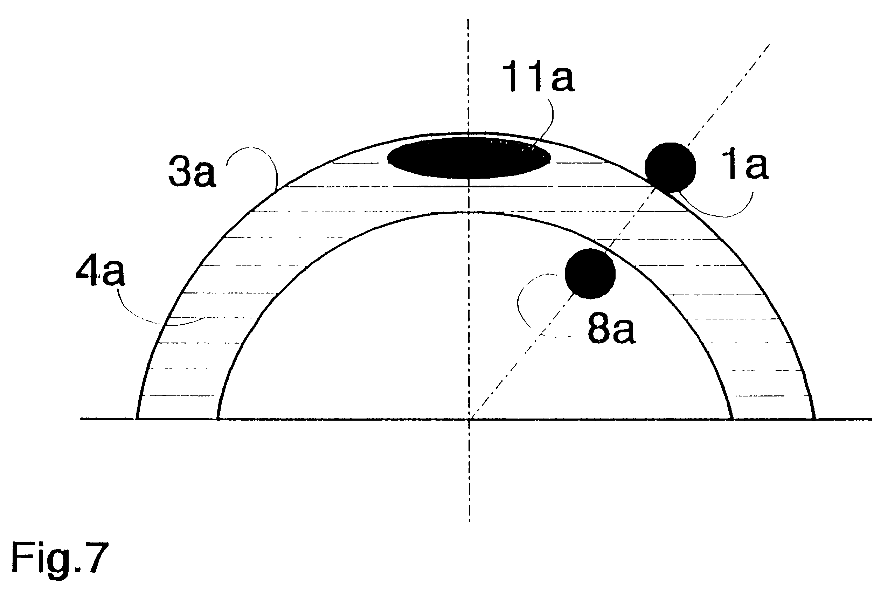

- Fig. 7:: eine schematische Darstellung einer bekannten Erfassungsvorricht.

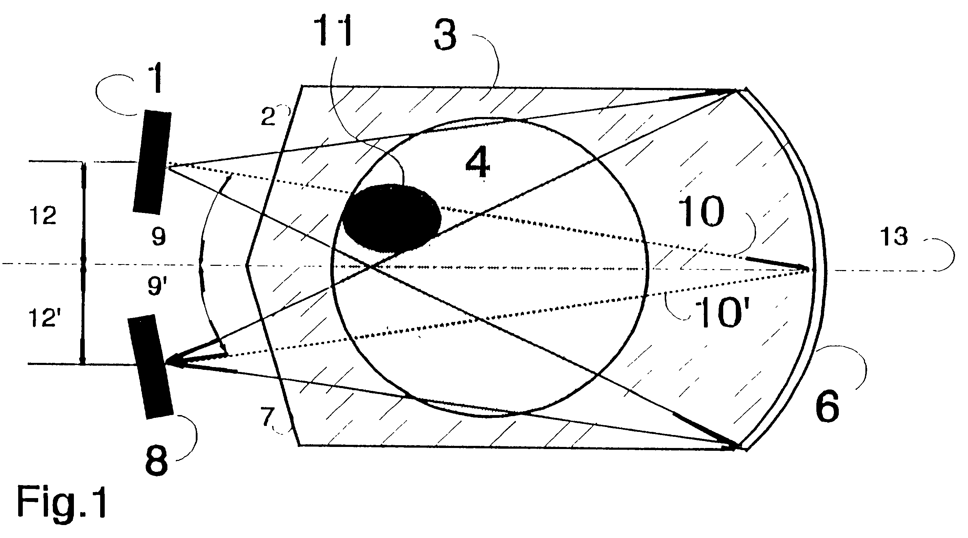

In Fig.1 ist ein erstes Ausführungsbeispiel einer Vorrichtung zur optischen Erfassung beschleunigungs- und/oder neigungsbedingter Bewegungen eines Körpers 11 in einem Medium 4 in Gestalt seines optischen Schemas dargestellt. Ein beispielsweise divergentes Licht abgebender Sender 1 ist gegenüber einer ebenen Fläche 2 eines als Libellenblock 3 ausgebildeten Trägerkörpers angeordnet. Ein Fluid 4 (hier: Flüssigkeit) ist innerhalb eines von dem Libellenblock 3 begrenzten Hohlraums 5 enthalten.

Das Licht, das auch nichtsichtbares Licht, insbesondere Infrarotlicht sein kann, des Senders 1 tritt durch die ebene Fläche 2 in den für dieses Licht optisch transparanten Libellenblock 3 ein, durchstrahlt die Wandung des Hohlraums 5, das Fluid 4 und durchdringt erneut den Libellenblock 3, um auf einen dem Sender 1 gegenüberliegend angeordneten Reflektor 6 aufzutreffen.

Dieser beispielsweise sphärische Reflektor 6 wirft das Licht als konvergierendes Strahlenbündel so zurück, daß das Fluid 4 des Hohlraumquerschnittes erneut durchstrahlt wird, und daß das Licht nach Austritt aus einer ebenen Fläche 7 des Libellenblocks 3 gebündelt einen Empfänger 8 erreicht. Ein erster Abstand 10 zwischen dem Sender 1 und dem Reflektor 6 sowie ein zweiter Abstand 10' zwischen dem Reflektor 6 und dem Empfänger 8 bilden mit einer optischen Achse 13 des Reflektors 6 einen ersten Winkel 9 bzw. einen zweiten Winkel 9'. Der Abstand des Senders 1 zur optischen Achse 13 ist mit 12 bezeichnet, während der Abstand des Empfängers 8 zur optischen Achse 13 mit 12' bezeichnet ist.

Der sphärische Reflektor 6 ist so ausgeführt, daß eine optische Abbildung des Senders 1 auf den Empfänger 8 unter Berücksichtigung der optischen Eigenschaften des Fluids 3 und des Libellenblocks 3 im Strahlengang realisiert ist. Der so erreichte zweimalige Durchgang des Lichtes durch den Hohlraum 5 hat den Vorteil, daß Strahlanteile, die vor Erreichen des Reflektors 6 an einem im Fluid 4 vorhandenen Körper 11, z.B. einer Gasblase, vorbeigegangen sind, nach der Reflektion am Reflektor 6 wieder auf diesen Körper 11 bzw. die Gasblase treffen. Das bedeutet, daß die Wirksamkeit eines verhältnismäßig kleinen Indikatorkörpers, hier eine Blase oder Gasblase 11, sich erhöht und somit einen größeren Intensitätsabfall im Vergleich zum einfachen Durchgang der Strahlung generiert (größere Abschattung des Empfängerfeldes). Damit werden größere Signaldifferenzen zwischen den Zuständen der Vorrichtung mit und ohne Blase 11 im Strahlengang des Senders 1 gemessen, d.h. die Sicherheit der Funktion dieser Vorrichtung ist erhöht. Damit ist das System auch toleranter gegenüber Variationen, die durch Temperaturveränderungen oder herstellungsbedingte Schwankungen verursacht werden können. Als Signalwert "1" wird der auf das (größere) Empfangsfeld des Empfängers 8 fokussierte Lichtstrahl ohne Hindernis, daß ohne auf den Körper bzw. die Gasblase 11 zu treffen erfaßt, während jede Erfassung der Gasblase 11 zu einem Signalwert zwischen "0" und "1" am Empfänger 8 führt.

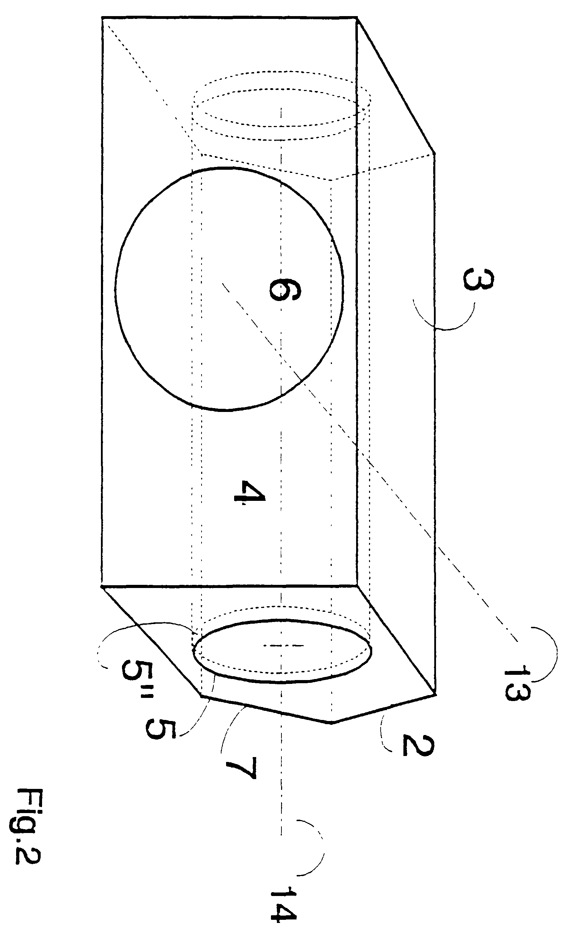

Eine schematische Darstellung dieses soeben beschriebenen Strahlengangs ist in der Figur 2 gezeigt. Daraus ist entnehmbar, daß der in der Figur 2 schraffierte obere Strahlenbereich des vom Sender 1 abgegebenen Lichtes die Gasblase oder Blase 11 nicht trifft und somit auch keinen Beitrag zu einem Intensitätsabfall liefern könnte, falls wie im Stand der Technik kein Reflektor 6 vorhanden wäre. Dieser schraffierte Strahlenbereich wird allerdings derart von Reflektor 6 zurückgeworfen, daß dieser schraffierte Bereich voll auf die Gasblase 11 trifft und somit den Intensitätsabfall am Empfänger 8 erhöht. Lediglich der kleine punktierte Strahlengangbereich trifft unbeeinflußt von der Gasblase 11 auf den Empfänger 8 auf. Zugleich ist aus den Fig.1 und 2 deutlich zu entnehmen, daß praktisch der gesamte Querschnitt des Hohlraumes 5 vom Strahlengang des Lichtes erfaßt wird.

Es ist möglich, die optische Abbildung durch Optimierung der vorhandenen geometrischen Abstände 9,11 und 12 und Radien bei vorgegebenen Brechzahlen so zu gestalten, daß der auf den Empfänger 8 auftreffende Fokus kleiner als die eingesetzte Empfängerfläche ist. Damit ist ein maximaler Signalwert (Ruhewert) für den Zustand der Vorrichtung ohne Gasblase 11 erreichbar. In die Intensität, die diesen Ruhewert der Spannung verursacht, sollten allerdings nur Strahlungsanteile eingehen, die von der Gasblase 11 auch beeinflußt werden können. Das sind die Anteile, die den Hohlraumquerschnitt ausleuchten und senkrecht dazu die Anteile, die etwa der Blasengröße entsprechen. Nicht von der Blase 11 beeinflußbare Lichtanteile erhöhen den Ruhewert des Signals bei gleichem Absolutbetrag des Wertes bei Blasendurchgang.

Zur räumlichen Trennung von Sender 1 und Empfänger 8 entsprechend den Abständen 12 bzw. 12', ist eine nicht axiale Konfiguration vorteilhaft, d.h. es werden ein Einfallswinkel 9 bzw. ein Ausfallswinkel 9' von diesen Abständen 12,12' bestimmt. Der Krümmungsradius des Reflektors 6 wird an diese Abbildungsgeometrie angepaßt.

Ausgehend von diesem ersten Ausführungsbeispiel sind verschiedene weitere Varianten als Ausführungsbeispiele der Erfassungsvorrichtung möglich, die zwar grundsätzlich dem in Figur 1 dargestellten Schema entsprechen, jedoch in ihren Parametern angepaßt werden müssen.

Bei guter Brechzahlanpassung von Fluid 4 und Libellenblock 3 ist bei Einsatz eines sphärischen Reflektors 3 der Verlauf einer Längsachse 14 des Libellenhohlraums 5 beliebig, so daß auch ein gerader, zylinderförmiger Libellenhohlraum 5, verwendet werden kann. Dies ist vorteilhaft bei definierten Neigungswinkeln oder konstruktiver Zuordnung mehrerer Erfassungsvorrichtungen für einen Libellenhohlraum 5.

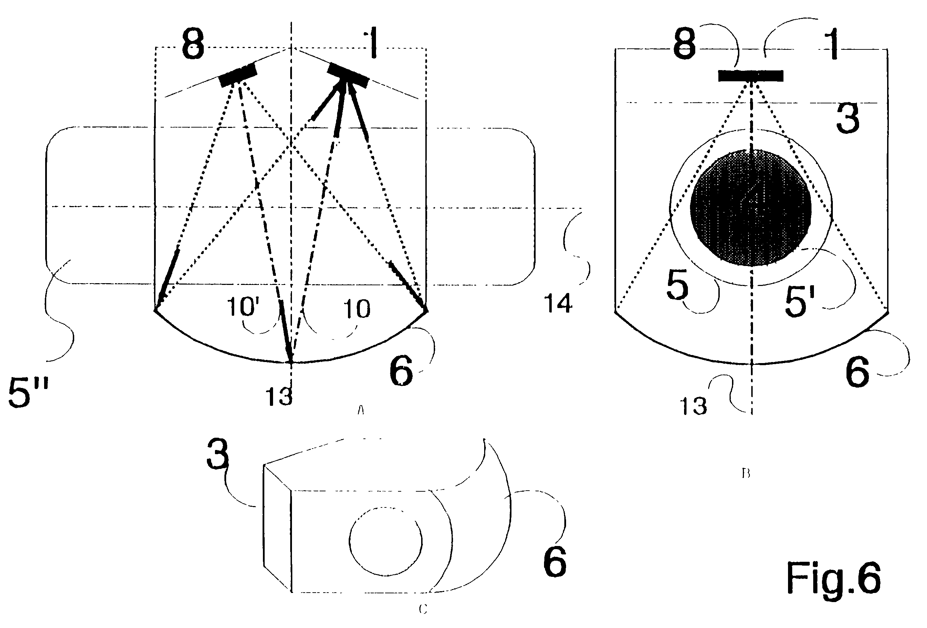

Gemäß eines zweiten Ausführungsbeispiels befindet sich das Fluid 4 mit der Gasblase 11 nicht direkt im Libellenblock 3, sondern ist von einem für das Licht des Senders 1 optische transparenten Behältnis 5' eingeschlossen, das in den Libellenblock 3 einsetzbar ist. Dies ist beispielsweise für alle Ausführungsbeispiele in Fig. 6A und B gezeigt. Damit sind auch die üblichen, geraden oder gekrümmten Libellen zusätzlich in den Libellenblock 3 einsetzbar. Das Material des Libellenblocks 3 gemäß Fig. 1 wird dem Material des Behältnisses 5' angepaßt, um die optische Wirkung zu unterdrücken. Außerdem sind der Krümmungsradius des Reflektors 6, die Abmessungen des Libellenblocks 3 und die optisch wirksamen Abstände 10 und 10' optimiert. Dies kann bei Verträglichkeitsproblemen zwischen dem Libellenblock 3 und dem Fluid 4 benutzt werden, indem das Material des Behältnisses 5' z.B. Brechzahlen korrigiert. Außerdem können bei langen Libellen mehrere Sensormodule, bestehend aus Sender 1, Empfänger 8, Trägerblock 3 und Reflektor 6 an einem Behältnis bzw. einer Libelle 5' angeordnet werden.

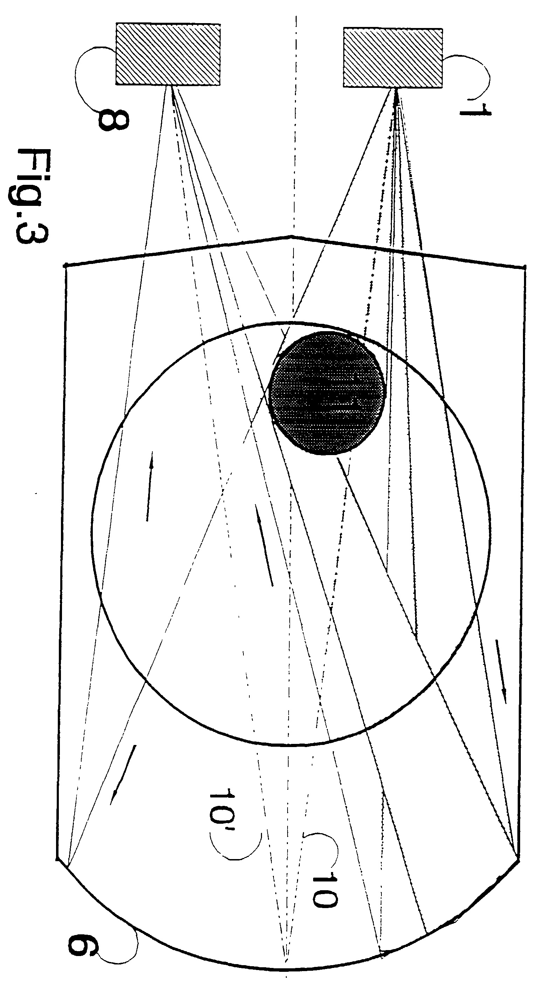

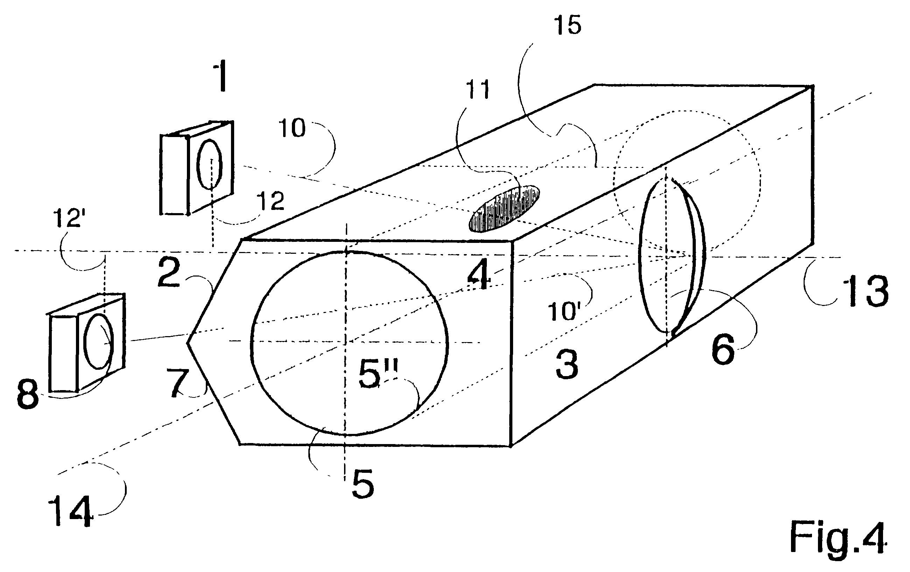

Die Figuren 3 und 4 zeigen Ausführungsbeispiele, bei denen jeweils die Libellenlängsachse 14 senkrecht zur optischen Achse 13 des Reflektors 6 orientiert ist. Gem. Fig.4 ist außerdem die Libellenlängsachse 14 auch noch senkrecht zu der Ebene ausgerichtet, die von dem Sender 1, dem Empfänger 8 und der optischen Achse 13 aufgespannt ist. Die ebenen Flächen 2 und 7 sind dabei um die Winkel 9 bzw. 9', wie in Fig. 1 gezeigt, zur optischen Achse 13 des Reflektors 6 derart geneigt, daß die Trennung der Position des Senders 1 von der Position des Empfängers 8 erreicht ist.

Wie in Fig.4 gezeigt, weisen der Sender 1 und der Empfänger 8 unterschiedliche Abstände 10 und 10' zum Reflektor 6 auf. Bei den Ausführungsbeispielen gemäß Fig. 3 und 4 befindet sich das Fluid 4 mit der Gasblase 11 in einem zylindrischen Hohlraum 5, der in den Libellenblock 3 eingearbeitet ist und einen Verschluß 5'', aufweist.

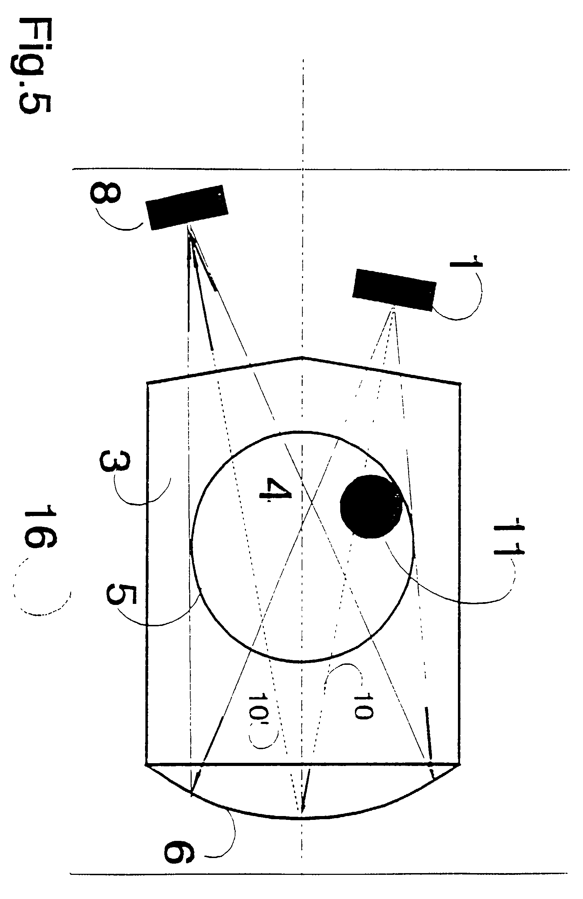

In Figur 5 ist ein Querschnitt durch einen Libellenblock 3 entsprechend eines fünften Ausführungsbeispiels dargestellt, wobei die Abstände 10 und 10' bzw. Objektweite 10 und die Bildweite 10', unterschiedlich ausgebildet sind. Das ergibt Vorteile bei der Anordnung von Sender 1 und Empfänger 8, die meist in einem Gehäuse 16 integriert bezogen werden können.

In den Figuren 6A bis 6C ist grundsätzlich ein dem ersten Ausführungsbeispiel entsprechendes Ausführungsbeispiel gezeigt. Dabei ist in Fig. 6A eine Draufsicht gezeigt, während die Fig. 6B einen Querschnitt darstellt, gesehen entlang der Linie I-I von Fig. 6A. In Fig. 6C ist ein Libellenblock 3 dieses Ausführungsbeispiels perspektivisch gezeigt. Allerdings ist hier die Libellenlängsachse 14 senkrecht zur optischen Achse 13 orientiert und liegt in der Ebene, die von dem Sender 1, dem Empfänger 8 und der optischen Achse 13 gebildet wird. Die ebenen Flächen 2 und 7 sind wiederum um die Winkel 9 bzw. 9' zur optischen Achse 13 des Reflektors 6 geneigt, so daß die Trennung der beiden Positionen von Sender 1 und Empfänger 8 erreicht ist. Ein besonders kompaktes Sensormodul wird dadurch erhalten, daß der Sender 1 und Empfänger 8 mit im Libellenblock 3 angeordnet sind. Weiterhin ist das Fluid 4 mit der Gasblase 11 wiederum in einem zylinderförmigen Behältnis 5' aus für das Licht des Senders 1 optisch transparenten Material vorhanden, so daß es besonders einfach ist, mehrere derartige Libellenblöcke 3 oder Sensormodule um ein einziges Behältnis 5' anzuordnen. Selbstverständlich kann dieses Sensormodul auch das Fluid 4 direkt umschließen wie bei den in den Figuren 1 und 3 gezeigten Ausführungsbeispielen.

Gemäß eines sechsten, nicht in den Figuren dargestellten Ausführungsbeispiels wird anstelle des sphärischen ein torischer Reflektor verwandt. Dadurch kann der Querschnitt des Lichtbündels an die Dimension des Flüssigkeitsquerschnitts bzw. Hohlraumquerschnitts und der Blasengröße so angepaßt werden, daß kein Verlust an Intensität nach dem Reflektor eintritt. Diese Maßnahme dient dazu, den Anteil an Licht zu erhöhen, der dem Ruhesignal entspricht, jedoch auch von der Blase beeinflußbar ist.

Ein siebentes, ebenfalls nicht dargestelltes Ausführungsbeispiel bietet eine weitere Möglichkeit einer Anpassung des Bündelquerschnitts an die Blasengröße, in dem die Apertur des Reflektors beschränkt wird. Dies bewirkt zwar einen Intensitätsverlust, d.h. einen geringen Ruhewert der Spannung, jedoch ist der Intensitätsabfall aufgrund eines Blasendurchgangs verbessert und somit auch das Sensorsignal.

Schließlich kann gemäß eines achten Ausführungsbeispiels zur Anpassung des Querschnitts des Lichtbündels an die Blasengröße ein definierter, bevorzugt kleiner Brechzahlunterschied zwischen Libellenflüssigkeit (Fluid) und dem Material des Libellenblocks dienen, der eine geringe Zylinderlinsenwirkung in der Querschnittsebene des Hohlraums einführt. Das bewirkt eine Trennung der Brennpunkte in den zwei Raumrichtungen mit dem Resultat, daß unerwünschte Strahlungsanteile in der Höhe den Empfänger nicht erreichen. Das entspricht einer Anpassung mit Intensitätsverlust.

Nach den Ausführungsbeispielen wird stets die Funktion bzw. Wirkungsweise der Vorrichtung sichergestellt durch praktisch vollständiges Ausleuchten des Libellenquerschnitts und vollständiges Erfassen dieser Strahlung durch den Empfänger bei Blasendurchgängen in jeder Position innerhalb des Hohlraumquerschnitts.

Des weiteren können evtl. auftretende Störeinflüsse beseitigt werden durch definierte Einbeziehung oder Unterdrückung der Brechkraft (Zylinderlinsenwirkung mit großer Aberration) des Libellenrohres, d.h. durch Einbeziehung optischer Komponenten mittels definierter Gestaltung der Brechzahlen von Libelle, Flüssigkeit und Libellenblock.

Eine Optimierung der absoluten Signalhöhe ist erreichbar durch Realisierung einer vollständigen Abbildung des Senders auf die Empfängerfläche durch vorzugsweise eine optische Komponente (Reflektor), um die Beleuchtungsstärke auf der Empfängerfläche und damit die absolute Signalgröße zu erhöhen.

Die Eindeutigkeit und Sicherheit der Vorrichtung ist gegeben durch die Erhöhung der Wirksamkeit der Blasengröße durch mehrfachen Strahlendurchgang. Dies führt zu einer Vergrößerung der Differenz zwischen den Spannungswerten am Empfänger mit und ohne Blasebeeinflussung des Strahlenganges.

Daraus ergeben sich folgende Vorteile für die Anordnung und deren Handhabung. Durch Faltung des Strahlenganges ist eine kurze Baulänge möglich, wobei auch noch Sender und Empfänger auf der gleichen Seite des Libellenblocks angeordnet werden können. Ferner ist ein mehrfaches Anbringen eines Sensormoduls aus Sender, Empfänger und Libellenblock an einem separaten Libellenkörper möglich. Eine Vereinfachung der Herstellung ist dadurch gegeben, daß nunmehr auch gerade Libellenkörper verwendet werden können und der Libellenblock aus einem Spritzgußteil bestehen kann.

Derartige Sensormodule können vorteilhaft im Automobilbau verwandt werden. Dabei sind Sensormodule zur Erfassung neigungsbedingter Bewegungen des Körpers oder einer Gasblase vorzugsweise in Automobilen einsetzbar, die ein Steuersignal zur Auslösung eines normalerweise versenkten Überrollbügels benötigen. Das Sensormodul könnte dabei derart im Fahrzeug angebracht sein, daß bei Überschreiten eines bestimmten Neigungswinkels des Fahrzeuges (z.B. beim Überschlagen) die Gasblase ihre gravitationsbedingte Ruhestellung verläßt, die Meßstrecke durchläuft und auf der Empfängerfläche einen Intensitätsabfall des auftreffenden Lichtbündels erzeugt. Das daraus erhaltbare Signal kann dann zur Auslösung des Überrollbügels genutzt werden.

Ein Sensormodul zur Erfassung beschleunigungsbedingter Bewegungen eines Körpers oder einer Gasblase kann in Richtung der interessierenden Beschleunigung ausgerichtet in einem Fahrzeug angeordnet werden. Diese Sensormodule eignen sich besonders zum Auslösen von Airbags, Gurtstraffern und Vorrichtungen zum Verschieben von Motorblöcken, wenn eine übermäßige Beschleunigung auftritt und die Gasblase durch die Meßstrecke bewegt wird. Auch hier dient wiederum das generierte Signal der Auslösung der Sicherheitsvorrichtung.

## Patentansprüche

1. Vorrichtung zur optischen Erfassung beschleunigungs- und/oder neigungsbedingter Bewegungen eines Körpers (11) in einem Medium (4), mit mindestens einem Sender (1) zur Abgabe von Licht auf das Medium (4), einem für das Licht des Senders (1) optisch transparenten Trägerkörper (3), in dessen Inneren ein Hohlraum (5) zur Aufnahme des Mediums (4) ausgebildet ist, und mit mindestens einem Empfänger (8) zum Empfangen des Lichtes nach Durchlaufen des Mediums (4), **dadurch gekennzeichnet**, daß eine Einrichtung (6) zum mehrfachen Durchstrahlen des von dem Sender (1) abgegebenen Lichtes durch das Medium (4) vor Erreichen des Empfängers (8) vorgesehen ist.

2. Vorrichtung nach Anspruch 1, **dadurch gekennzeichnet,** daß die Einrichtung ein Reflektor (6) ist.

3. Vorrichtung nach Anspruch 1 oder 2, **dadurch gekennzeichnet,** daß der Trägerkörper ein lichtdurchlässiger Libellenblock (3) ist und der Sender (1) divergentes Licht abgibt, das an einer ersten Fläche (2) des Libellenblocks (3) eintritt und die Wandung des Hohlraums (5) und das Medium (4) durchstrahlt.

4. Vorrichtung nach mindestens einem der Ansprüche 1 bis 3, **dadurch gekennzeichnet,** daß der Hohlraum (5) zylinderförmig ausgebildet ist.

5. Vorrichtung nach mindestens einem der vorstehenden Ansprüche 1 bis 4, **dadurch gekennzeichnet,** daß das Medium ein Fluid (4) ist.

6. Vorrichtung nach mindestens einem der vorstehenden Ansprüche 1 bis 4, **dadurch gekennzeichnet,** daß die Brechzahlen des Mediums bzw. Fluids (4) und des Libellenblocks (3) aneinander angepaßt, vorzugsweise zumindest annähernd gleich sind.

7. Vorrichtung nach mindestens einem der vorstehenden Ansprüche 1 bis 6, **dadurch gekennzeichnet,** daß der Reflektor (6) eine an die des Mediums bzw. Fluids (4) und des Trägerkörpers bzw. Libellenblocks (3) angepaßte Brechzahl aufweist.

8. Vorrichtung nach mindestens einem der vorstehenden Ansprüche 2 bis 7, **dadurch gekennzeichnet,** daß die Abstände (10, 10') zwischen dem Sender (1) und dem Reflektor (6) und zwischen dem Reflektor (6)und dem Empfänger (8) und die Radien des Reflektors (6) bei vorgegebenen Brechzahlen derart gestaltet sind, daß der Fokus des reflektierten Lichts kleiner als die Aufnahmefläche des Empfängers (8) ist.

9. Vorrichtung nach mindestens einem der vorstehenden Ansprüche 1 bis 8, **dadurch gekennzeichnet,** daß die Lichteintrittsfläche (2) und die Lichtaustrittsfläche (7) des Trägerkörpers bzw. Libellenblocks (3) ebene Flächen sind.

10. Vorrichtung nach mindestens einem der vorstehenden Ansprüche 1 bis 9, **dadurch gekennzeichnet,** daß der Sender (1) zur optischen Achse (13) des Reflektors (6) einen Einfallswinkel (9) bildet und der Empfänger (8) zur optischen Achse (13) einen Ausfallswinkel (9') bildet derart, daß Sender (1) und Empfänger (8) beiderseits der optischen Achse (13) zueinander geneigt angeordnet sind.

11. Vorrichtung nach Anspruch 8 und 10, **dadurch gekennzeichnet,** daß die beiden ebenen Flächen (2,7) zueinander geneigt angeordnet sind.

12. Vorrichtung nach mindestens einem der vorstehenden Ansprüche 8 bis 11, **dadurch gekennzeichnet,** daß die Abstände (10,10') vom Sender (1) bzw. vom Empfänger (8) zum Reflektor (6) ungleich ausgebildet sind.

13. Vorrichtung nach mindestens einem der vorstehenden Ansprüche 1 bis 12, **dadurch gekennzeichnet,** daß der Reflektor (6) ein sphärischer oder torischer Reflektor ist.

14. Vorrichtung nach mindestens einem der vorstehenden Ansprüche 1 bis 13, **dadurch gekennzeichnet,** daß das Medium (4) in einem für das Licht des Senders (1) optisch transparenten Behältnis (5') enthalten ist, dessen Form derjenigen des Hohlraums (5) angepaßt ist.

15. Vorrichtung nach mindestens einem der vorstehenden Ansprüche 4 bis 14, **dadurch gekennzeichnet,** daß die Hohlraumlängsachse (14) senkrecht zur optischen Achse (13) des Reflektors (6) ausgerichtet ist und senkrecht zu einer Ebene liegt, die vom Sender (1), vom Empfänger (8) und der optischen Achse (13) gebildet ist.

16. Vorrichtung nach mindestens einem der vorstehenden Ansprüche 4 bis 14**, dadurch gekennzeichnet,** daß die Hohlraumlängsachse (14) senkrecht zur optischen Achse (13) des Reflektors ausgerichtet ist und in einer Ebene liegt, die vom Sender (1), vom Empfänger (8) und der optischen Achse (13) gebildet ist.

17. Vorrichtung nach mindestens einem der vorstehenden Ansprüche 1 bis 16, **dadurch gekennzeichnet,** daß mehrere Sender (1), Empfänger (8) und Reflektoren (6) vorhanden sind.

18. Vorrichtung nach mindestens einem der vorstehenden Ansprüche 1 bis 17, **dadurch gekennzeichnet,** daß der Trägerkörper (3) ein Spritzgußteil ist.
